(19) Europäisches Patentamt
European Patent Office
Office européen des brevets

(11) **EP 4 167 543 B1**

(12) **FASCICULE DE BREVET EUROPEEN**

(45) Date de publication et mention
de la délivrance du brevet:
**29.04.2026 Bulletin 2026/18**

(21) Numéro de dépôt: **22201445.8**

(22) Date de dépôt: **13.10.2022**

(51) Classification Internationale des Brevets (IPC):
*H04L 45/00* *(2022.01)*    *H04L 45/24* *(2022.01)*
*H04L 47/125* *(2022.01)*

(52) Classification Coopérative des Brevets (CPC):
**H04L 47/125; H04L 45/22; H04L 45/24**

(54) **PROCÉDÉ DE RÉPARTITION DE FLUX DE DONNÉES ENTRE DES RÉSEAUX ETENDUS ET SYSTÈME DE COMMUNICATION**

VERFAHREN ZUR VERTEILUNG VON DATENSTRÖMEN ZWISCHEN ERWEITERTEN NETZWERKEN UND KOMMUNIKATIONSSYSTEM

METHOD FOR DISTRIBUTING DATA FLOWS BETWEEN WIDE AREA NETWORKS AND COMMUNICATION SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.10.2021 FR 2110894**

(43) Date de publication de la demande:
**19.04.2023 Bulletin 2023/16**

(73) Titulaire: **THALES**
**92400 Courbevoie (FR)**

(72) Inventeurs:
• **CONAN, Vania**
**92622 GENNEVILLIERS CEDEX (FR)**
• **REBECCHI, Filippo**
**92622 GENNEVILLIERS CEDEX (FR)**
• **GRANDBLAISE, David**
**92622 GENNEVILLIERS CEDEX (FR)**
• **KLOTZ, Olivier**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**EP-A1- 2 804 351**

**Description**

La présente invention traite de la répartition de flux de données entre plusieurs réseaux séparés d'un système de communication. L'invention se rapporte également à un programme d'ordinateur pour répartir des flux de données entre plusieurs réseaux séparés d'un système de communication. L'invention propose en outre un système de communication à plusieurs réseaux.

Dans le domaine des réseaux de communication, la répartition de trafic entre deux ou plusieurs chemins d'un même réseau utilise un mécanisme de routage multi-chemin homogène dans les routeurs, désigné par l'acronyme ECMP correspondant à l'expression anglo-saxonne « Equal-cost multi-path routing ». Les paquets IP d'un même flux, avec même source et même destination, sont acheminés sur plusieurs chemins de coût égal. Des chemins de même coût sont définis comme tels par la métrique de l'algorithme de routage : le nombre de sauts, la bande passante max, et d'autres paramètres. Le trafic est réparti équitablement entre les différents chemins. De plus ECMP est implémenté dans toutes les solutions de routage. Par exemple ces solutions de routage peuvent être du type OSPF dont l'acronyme correspond à l'expression anglo-saxonne « Open Shortest Path First », de type ISIS dont l'acronyme correspond à l'expression anglo-saxonne « Intermediate System to Intermediate System », de type EIGRP dont l'acronyme correspond à l'expression anglo-saxonne « Enhanced Interior Gateway Routing Protocol », ou encore de type BGP dont l'acronyme correspond à l'expression anglo-saxonne « Border Gateway Protocol ». Néanmoins la stratégie de répartition est fixe et très limitée, elle ne prend pas en compte la charge effective des chemins et ne peut pas s'adapter à la dynamique des flots. Un exemple de répartition de trafic entre plusieurs réseaux est décrit dans le document EP2804351A1 (NEC CORP [JP]).

Pour permettre des stratégies plus riches de répartition de la charge, des stratégies de routage multi-chemin non-homogène, généralement désignées par l'expression anglo-saxone « non-equal-cost multi-path routing » ont été proposées par la littérature. Ainsi la solution DW, dont l'acronyme correspond à l'expression anglo-saxonne « Downward Path Criterion », ne limite pas le choix des chemins aux chemins de même coût, mais autorise également des chemins de coût légèrement plus élevés. Le but de ces stratégies est d'utiliser davantage de chemins pour répartir le trafic dans le réseau.

La répartition de charge entre des réseaux différents, séparés et distincts, existe également à travers des mécanismes de type PBR dont l'acronyme correspond à l'expression anglo-saxonne « Policy Based Routing », ou de type PfR dont l'acronyme correspond à l'expression anglo-saxonne « Performance based Routing », et de type routage par logiciel, généralement connu sous l'acronyme « SDWAN ». Ces mécanismes permettent d'aiguiller les flux sur des critères techniques tels que la bande passante disponible, la qualité du lien avec satisfaction du SLA, dont l'acronyme correspond à l'expression anglo-saxonne « Satisfaction Level Agreement ». Les critères techniques peuvent également être opérationnels : l'aiguillage des flux peut être en fonction du type de l'application ou du profile de l'usager. Néanmoins, ces mécanismes sont limités dans leur capacité à s'adapter aux variabilités liées aux profils de trafic hétérogènes.

La répartition de flux est un problème qui est également traité dans le cadre des fermes de serveurs, également connus sous l'expression anglo-saxonne « cloud data centres ». Dans ce cas il s'agit de répartir les requêtes applicatives en entrée d'un data centre pour les répartir sur les différents serveurs, machines virtuelles, conteneurs. La fonction de répartition des requêtes est prise en charge par un répartiteur de charge, également connus sous l'expression anglo-saxonne « load balancer ».

La plupart des répartiteurs de charge mettent en oeuvre des règles statiques. Ils associent à chaque serveur un poids, la distribution des poids correspondant à la cible de distribution des requêtes entrantes sur les serveurs. Cette distribution peut être uniforme, également désignés par l'expression anglo-saxonne « Round Robin » ; ou non-uniforme ce qui est généralement désigné par l'acronyme WCMP, correspondant à l'expression anglo-saxonne « Weighted Round Robin ». La distribution peut être effectuée selon que les serveurs ont les mêmes capacités CPU ou non. Ces stratégies sont également statiques, elles fonctionnent en moyenne, mais créent un déséquilibre systématique en présence de flux de caractéristiques hétérogènes, comme il se produit dans les réseaux et les data centres.

La stratégie de moindre charge, couramment désignée par l'expression anglo-saxonne « Least Loaded », en revanche, prend en compte l'état de la charge de chaque serveur et affecte les requêtes entrantes au serveur le moins chargé. C'est la stratégie utilisée par les solutions Kubernetes et HAProxy. Cette stratégie fonctionne pour une période de prise de décision très courte. Plus cette période s'allonge, moins elle est efficace car elle travaille en aveugle par rapport à l'évolution du trafic.

Les réseaux et méthodes mentionnés ci-avant sont statiques. Ils ne prennent pas en compte l'impact d'une décision sur la charge future sur les réseaux. Ceci produit un déséquilibre de charge dans le temps et donc des violations de l'objectif SLA qui demande de respecter les proportions entre réseaux.

On connaît un procédé de répartition de flux entrant entre plusieurs réseaux, où le réseau le moins chargé est choisi afin d'y faire transiter les paquets IP d'un même flux. Un tel procédé nécessite l'obtention des charges de chaque réseau, puis la comparaison de ces charges afin d'identifier la plus faible.

La difficulté de cette approche est que la décision qui est prise sur les flux ne se traduit pas de façon directe sur la charge. En effet certaines sessions sont très courtes alors que d'autres sont très longues. Ces dernières restent longtemps dans le réseau, et créent ainsi une charge supplémentaire aléatoire que ces stratégies ne savent pas prendre en compte.

Par ailleurs, les décisions étant prises localement par chaque routeur, les décisions entre les routeurs d'entrée sont indépendantes. Ceci conduit à des contentions de ressources et donc une sous-optimalité d'utilisation des ressources disponibles.

L'invention a pour objectif d'optimiser l'utilisation d'un système de communication comprenant un ensemble de réseaux.

A cet effet, l'invention a pour objet un procédé de répartition de flux de données dans un système de communication comprenant une pluralité de réseaux séparés les uns des autres, et un jeu d'équipements d'aiguillage connectés aux réseaux et adaptés à diriger un flux entrant vers l'un des réseaux; au moins un ou chaque équipement d'aiguillage dudit jeu étant configuré de manière à diriger toutes les trames de données d'un même flux entrant vers un autre équipement d'aiguillage dudit jeu via un même réseau de la pluralité de réseaux; le procédé comprenant l'étape : mesure de flux des réseaux afin de calculer une charge effective propre à chaque réseau sur une période de référence ; remarquable en ce que le procédé comprend en outre les étapes suivantes : obtention d'une répartition cible de flux entre les réseaux, la répartition cible comprenant des proportions cibles associées aux réseaux ; obtention d'une valeur de charge entrante $\beta$ dans les réseaux sur une période suivant la période de référence ; obtention d'une proportion persistante $\alpha$ de flux se propageant dans les réseaux pendant à la fois la période de référence et la période suivante ; estimation, avec des moyens de contrôle, d'une consigne de répartition comprenant une proportion ajustée pour chaque réseau, au moins une ou chaque proportion ajustée étant fonction : d'une des proportions cibles, d'une des charges effectives, de la valeur de charge entrante $\beta$, et de la proportion persistante $\alpha$ ; et étant apte à minimiser un score de divergence de répartition par rapport à la répartition cible sur la période suivante ; répartition de flux entrant, selon les proportions ajustées, entre les réseaux par les équipements d'aiguillage.

Grâce au procédé selon l'invention, les proportions appliquées en entrée des réseaux permet de corriger, de compenser, le déséquilibre généré par les flux de données qui perdurent d'une période à l'autre. Des pics de charge sont évités, tout comme des situations de saturation de réseau. En corolaire, les proportions ajustées permettent de mieux répartir les flux de données et de mieux exploiter les ressources disponibles du système de communication.

Suivant d'autres aspects avantageux de l'invention, le procédé comprend une ou plusieurs des caractéristiques suivantes, prises isolément ou suivant toutes les combinaisons techniquement possibles :

- L'étape d'obtention de la valeur de charge entrante $\beta$ comprend une mesure de flux de données entrant dans le système de communication via les équipements d'aiguillage pendant la période suivante, et l'étape d'obtention de la proportion persistante $\alpha$ comprend une mesure de flux se propageant pendant, à la fois la période de référence et au moins la période suivante via les équipements d'aiguillage.
- A l'étape d'obtention de la valeur de charge entrante $\beta$ et à l'étape d'obtention de la proportion persistante $\alpha$, la valeur de charge entrante $\beta$ et la proportion persistante $\alpha$ sont établies à l'aide d'un algorithme d'apprentissage machine.
- Le système de communication comprend des interfaces de sortie de réseau reliant chaque équipement d'aiguillage à chaque réseau de manière indépendante ; à l'étape de mesure les flux sont mesurés auxdites interfaces de sortie réseau, lesdits flux sortants étant mesurés par les équipements d'aiguillage.
- Le score de divergence de répartition comprend une somme de différences, chaque différence étant associée à l'un des réseaux et comprenant l'écart entre une des proportions cibles et un ratio de charge réseau sur la période suivante.
- Les moyens de contrôle comprennent un module de contrôle séparé des équipements d'aiguillage, le procédé comprend en outre une étape de communication des proportions ajustées aux équipements d'aiguillage.
- Le jeu de réseaux comprend un premier réseau et un deuxième réseau, les proportions cibles comprenant une première proportion cible pour le premier réseau et une deuxième proportion cible pour le deuxième réseau, la deuxième proportion cible étant supérieure ou égale au double de la première proportion cible.

L'invention a également pour objet un produit programme d'ordinateur comprenant des instructions qui, lorsque le programme est exécuté par un ordinateur, conduisent celui-ci à mettre en oeuvre la méthode selon l'invention.

L'invention a également pour objet un système de communication comprenant des moyens de contrôle, une pluralité de réseaux séparés les uns des autres, et un jeu d'équipements d'aiguillage connectés aux réseaux et adaptés à diriger un flux entrant vers l'un des réseaux ; au moins ou chaque équipement d'aiguillage dudit jeu étant configuré de manière à diriger toutes les trames de données d'un même flux de données entrant vers un autre équipement d'aiguillage dudit jeu via un même réseau de la pluralité de réseaux; le système de communication étant configuré de manière à exécuter le procédé de répartition de flux de données selon l'invention.

Suivant d'autres aspects avantageux de l'invention, le système comprend une ou plusieurs des caractéristiques suivantes, prises isolément ou suivant toutes les combinaisons techniquement possibles :

- Les moyens de contrôles sont intégrés dans au moins un ou dans chaque équipement d'aiguillage.
- Chaque équipement d'aiguillage est un routeur et chaque réseau est un réseau étendu.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

[Fig 1] la figure 1 est un schéma d'un système de communication selon l'invention ;
[Fig 2] la figure 2 est une représentation simplifiée du système de communication de la figure 1 ; et
[Fig 3] la figure 3 est un diagramme d'un procédé de répartition de flux selon l'invention.

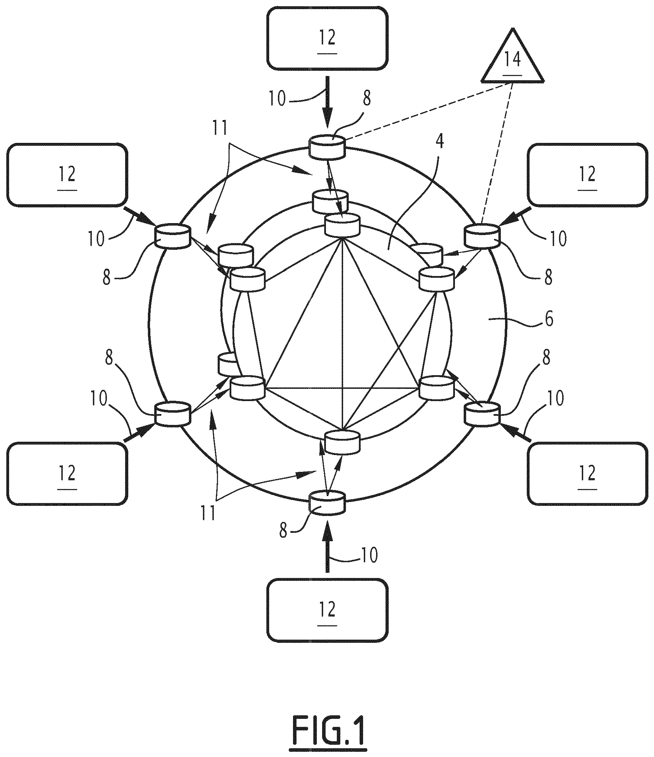

La figure 1 représente un système de communication 2 selon l'invention. Le système de communication 2 est apte à communiquer tout type de données numériques.

Le système de communication 2 comprend une pluralité de réseaux 4, 6, dont un premier réseau 4 et un deuxième réseau 6. Ces réseaux 4, 6 sont séparés les uns des autres. Ils sont indépendants l'un de l'autre. Chaque réseau 4, 6 comprend des ressources propres. Les réseaux comprennent des nœuds propres. Les réseaux comprennent des segments propres, qui relient leurs propres nœuds. Les réseaux 4, 6 sont des réseaux étendus, généralement désignés par l'acronyme WAN qui correspond à l'expression anglo-saxonne « Wide Area Network ». Ils sont des réseaux filaires, et/ou des réseaux qui communiquent par ondes électromagnétiques. En revanche, le système de communication 2 est un système de communication par satellite. Les réseaux sont de types différents ou non. Ils comprennent des débits maximum différents ou identiques. Dans le présent exemple seuls deux réseaux 4, 6 sont représentés, toutefois l'invention s'applique également à un système de télécommunication 2 avec davantage de réseaux.

Le système de communication 2 comprend en outre un jeu d'équipements d'aiguillage 8 utilisant les deux réseaux. Les équipements d'aiguillage 8 sont connectés aux réseaux 4, 6. Chaque équipement d'aiguillage 8 forme à la fois un équipement d'aiguillage d'entrée et un équipement d'aiguillage de sortie pour les deux réseaux, selon qu'un flux de données entre ou sorte d'un des réseaux 4, 6 via l'équipement d'aiguillage 8. Les équipements d'aiguillage sont bidirectionnels.

Les équipements d'aiguillage 8 sont configurés afin de sélectionner un des réseaux 4, 6, et d'y aiguiller un flux entrant 10. Par ailleurs, ils sont configurés de manière à diriger toutes les trames de données d'un même flux entrant 10 vers un même équipement d'aiguillage 8 de sortie par un seul et même réseau de la pluralité de réseaux. Cela permet d'améliorer la cohérence des flux applicatifs.

Le système de communication 2 comprend, ou relie, des stations externes 12. Ces stations externes 12 comprennent au moins une interface utilisateur et au moins un serveur qui sont connectés à des équipements d'aiguillage 8 différents. Le serveur est formé par une ferme de serveurs communiquant avec des interfaces utilisateurs via le système de communication 2.

Chaque trame de données, également appelé paquet IP, comprend avantageusement un entête avec une adresse source et une adresse de destination. Chaque trame de données comprend des octets sur lesquels sont enregistrés les données.

Le système de communication 2 comprend des interfaces 11 entre chaque réseau 4, 6 et chaque équipement d'aiguillage 8. Elles relient chaque réseau à chaque équipement d'aiguillage. Les interfaces 11 sont bidirectionnelles. Elles comprennent chacune, pour chaque réseau et pour chaque équipement d'aiguillage, une interface d'entrée de réseau et une interface de sortie de réseau.

Tous les paquets IP appartenant à un même flux entrant 10, par exemple d'une session TCP dont l'acronyme correspond à l'expression anglo-saxonne «Transmission Control Protocol » ; ou d'une session UDP dont l'acronyme correspond à l'expression anglo-saxonne «User Datagram Protocol » ; sont redirigés vers une même interface 11 d'entrée de réseau ; et donc vers un même réseau. Le système de communication 2 permet de transférer un flux de données d'entrée 10 depuis un équipement d'aiguillage 8 côté source vers un équipement d'aiguillage 8 côté destination. Les équipements d'aiguillage 8 comprennent des moyens de télémétrie, notamment afin de mesurer indépendamment les flux en sortie des réseaux.

Chaque équipement d'aiguillage 8 comporte des moyens de mesure de flux entrant sur chaque réseau sur des périodes de temps prédéterminées.

De même, chaque équipement comporte des moyens de mesure des flux sortant.

Par exemple, le flux est caractérisé par le débit moyen entrant pendant la période de temps considérée.

En outre, chaque équipement comporte des moyens de stockage pour chaque période de temps d'un identifiant de chaque trame entrante et sortante et de sa taille formée par exemple du nombre d'octets la constituant.

Les équipements d'aiguillage 8 forment un équipement de bordure. Dans le présent mode de réalisation, le jeu comprend six équipements d'aiguillage 8. Les équipements d'aiguillage 8 sont des équipements de commutation, commutant vers l'un ou l'autre des réseaux. Les équipements sont des routeurs. Chaque routeur est configuré pour faire transiter des paquets IP, ou trames de flux, d'une interface 11 d'entrée d'un des réseaux vers une autre interface 11 de sortie d'un même réseau. Au moins un ou chaque routeur comprend un port d'entrée, un port de sortie, et un processeur de routage.

Le système de communication 2 comprend un module de contrôle 14 des équipements d'aiguillage. Le module de contrôle 14 est fonctionnellement connecté à chaque équipement d'aiguillage 8. Chaque module d'aiguillage 8 est propre à transmettre à l'issue de chaque période de temps, la mesure du flux entrant, l'identifiant de chaque trame entrée sur un réseau, sa taille et le réseau utilisé, ainsi que le flux sortant, l'identifiant de chaque trame sortante, sa taille et le réseau d'origine. Le module de contrôle 14 centralise les quantités d'octets mesurées en sortie de chaque réseau. Les mesures de flux aux interfaces 11 de sortie de réseau permettent de caractériser la charge dans chaque réseau 4, 6 puisque ces flux dépendent des surcharges réseau en amont. Le module de contrôle 14 comprend une unité de stockage de données, et une unité de traitement de données tel un processeur. L'unité de stockage stocke les mesures des flux des réseaux. Grâce aux liaisons entre les équipements d'aiguillage 8 et le module de contrôle 14, ce dernier est propre à communiquer une consigne de répartition aux équipements d'aiguillage 8, afin qu'ils orientent des flux d'entrée 10 selon cette consigne de répartition. Pour ce faire, le module de contrôle 14 est configuré de manière à calculer une proportion ajustée et dédiée à chaque réseau.

A cet effet, chaque équipement comporte des moyens de répartition de flux en fonction de la proportion ajoutée $U4$ et $U6$ calculée pour chaque équipement d'aiguillage et transmise par le module de contrôle 14.

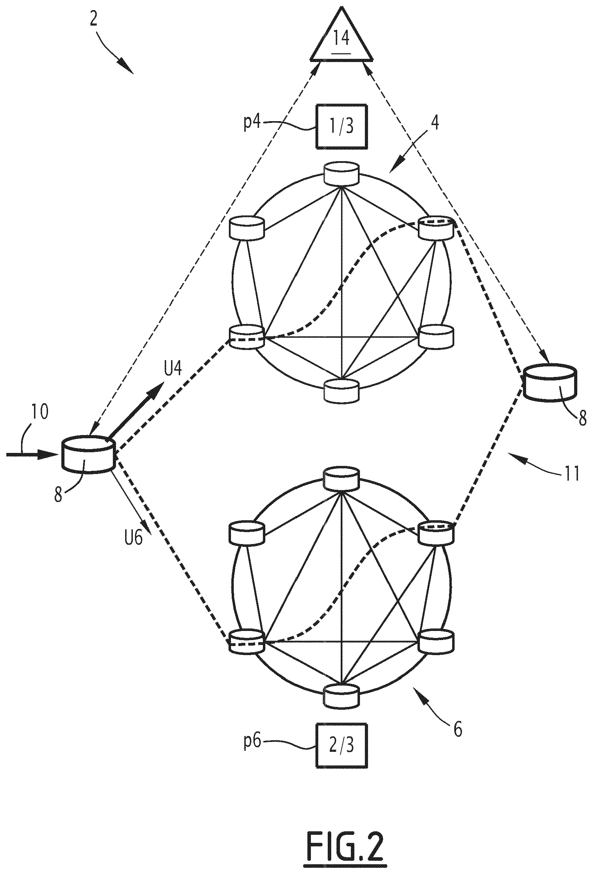

La figure 2 représente de manière simplifiée le système de communication 2 de la figure 1, et illustre le processus de sélection d'un réseau parmi ceux possibles via les réseaux 4, 6. Seuls deux équipements d'aiguillage 8 sont représentés par soucis de clarté.

Dans le présent cas, la répartition cible de flux, ou répartition visée, comprend une première proportion cible $p4$, égale à un tiers, qui s'applique au premier réseau 4 ; et une deuxième proportion cible $p6$, égale à deux tiers, qui s'applique au deuxième réseau 6. Dans le présent cas la deuxième proportion cible $p6$ est égale au double de la première proportion cible $p4$. La somme des proportions cibles est égale à 1. Les proportions cible sont fixées à priori lors de la configuration, par exemple en fonction des capacités des réseaux.

Le module de contrôle 14 est configuré de manière à communiquer des mêmes proportions ajustées $U4$ et $U6$ à chaque équipement d'aiguillage 8; leur somme vaut 1. La première proportion ajustées $U4$ correspond à la proportion de flux entrant 10 dans un équipement d'aiguillage d'entrée et aiguillée dans le premier réseau 4, et la deuxième proportion ajustée $U6$ correspond à la proportion de flux entrant 10 dans l'équipement d'aiguillage d'entrée et aiguillée dans le deuxième réseau 6. Le module de contrôle est adapté de manière à lisser, à équilibrer les divergences par rapport à la répartition cible, et ce en calculant puis en appliquant une proportion ajustée, ou ratio de distribution; à chaque réseau.

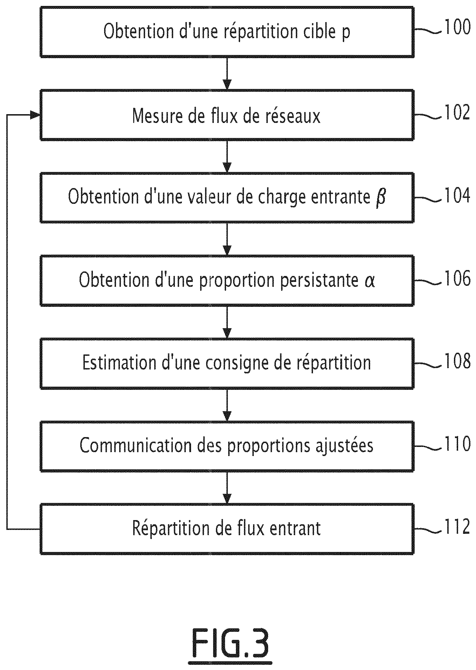

La figure 3 représente un diagramme d'un procédé de répartition de flux de données dans un système de communication. Le système de communication correspond à ceux décrits en relation avec l'une des figures 1 à 2.

Le procédé comprend une étape obtention 100 d'une répartition cible p de flux comprenant des proportions cibles associées à chaque réseau. Les proportions cibles sont définies en fonctions de conditions optimales de fonctionnement du système de communication. A cette étape, les proportions cibles $p4$, $p6$ sont communiquées par le module de contrôle aux équipements d'aiguillage. Les proportions cibles sont prédéfinies ou calculées suite à une modification du fonctionnement du système de communication. Lorsque le débit maximal d'un réseau diminue en raison d'un disfonctionnement, la proportion cible correspondant à ce réseau diminue et la proportion cible de l'autre réseau augmente.

Le procédé comprend une étape 102 de mesure de flux des réseaux, optionnellement en entrée et/ou en sortie des réseaux, afin de calculer une charge effective propre à chaque réseau sur une période de référence t, également appelée première période. Une charge correspond à une quantité d'octets sortant d'un réseau pendant la période de référence t. Elle est calculée par le module de contrôle 14 à partir des quantités d'octets sortants reçus depuis chaque équipement d'aiguillage. Afin de déterminer les charges propres pendant la période de référence, les équipements d'aiguillage comptent uniquement les octets sortant des réseaux. Chaque équipement d'aiguillage communique ces nombres d'octets pour chaque réseau au module de contrôle. Le module de contrôle additionne les nombres d'octets sur la période de référente t pour chaque réseau et obtient la charge propre de chaque réseau sur la période de référence. A l'étape de mesure 102 de flux des réseaux, pour la période de référence t, on note $X(t)$ la charge sur le premier réseau, et $Y(t)$ la charge sur le deuxième réseau. La charge totale sur l'ensemble des réseaux est notée $Z(t)$, et vérifie l'équation $Z(t) = X(t) + Y(t)$. A l'étape de mesure 102, les flux sont mesurés aux interfaces de sortie réseau, lesdits flux sortants étant préférentiellement mesurés par les équipements d'aiguillage.

Le procédé comprend une étape d'obtention 104 d'une valeur de charge entrante $\beta$ dans les réseaux pendant une période t+1 qui suit la période de référence t. La charge entrante $\beta$ correspond au nombre d'octets entrant dans le système de communication pendant la période suivante t+1. Pendant la période suivante t+1, les équipements d'aiguillage 8 observent les entêtes des trames de manière à identifier les trames correspondant à des flux entrant commençant pendant la période suivante t+1. Lorsqu'un équipement d'aiguillage 8 identifie un tel flux, il en comptabilise le nombre d'octets. Chaque équipement d'aiguillage 8 effectue ce comptage pour chaque réseau sur la période suivante t+1. Ensuite, les équipements d'aiguillage 8 transmettent les nombres d'octets de chaque réseau au module de contrôle qui les additionne, et obtient la charge entrante $\beta$. La période suivante et la période de référence ont la même durée. La période suivante est indicée t+1, et les charges sur les réseaux s'écrivent X(t+1) et Y(t+1) sur cette période suivante.

Le procédé comprend une étape d'obtention 106 d'une proportion persistante $\alpha$ de flux se propageant dans les réseaux pendant la période de référence t et la période suivante t+1. A la période de référence t, le flux se décompose en une partie P1 finissant pendant la période de référence t, et une partie P2 se propageant à la fois pendant la période de référence t et la période suivante t+1.

La proportion persistante $\alpha$ est donnée par la formule $\alpha$ = P2/(P1+P2). La partie P1 et la partie P2 sont identifiées grâce aux entêtes des trames et aux nombres d'octets des trames. Pendant la période de référence t et la période suivante t+1, les équipements d'aiguillage identifient des trames des flux qui se terminent pendant la période de référence t. Elles se propagent en période de référence t mais pas en période suivante t+1. Les équipements d'aiguillage 8 transmettent alors les nombres d'octets de ces dernières trames au module de contrôle, qui en les additionnant pour tous les réseaux, obtient la partie P1. En complément, les équipements d'aiguillage identifient et les trames de flux se propageant à la fois pendant la période de référence t et la période suivante t+1. Les équipements d'aiguillage 8 transmettent les nombres d'octets de ces dernières trames au module de contrôle. En additionnant ces nombres d'octets pour tous les réseaux, le module de contrôle obtient la partie P2. La proportion persistante $\alpha$ comprend une combinaison de flux dont la durée de propagation est supérieure à la période de référence ; et de flux dont la durée de propagation est inférieure à ladite période mais dont l'acheminement est à cheval sur les deux périodes t et t+1.

Grâce aux informations collectées, sur la période suivante t+1, les charges estimées du premier réseau et du deuxième réseau s'écrivent respectivement X(t+1) = $\alpha$ * X(t) + $\beta$ * U4 ; et Y(t+1) = $\alpha$ * Y(t) + $\beta$ * U6 ; où U4 et U6 forment des inconnues à identifier. Ces équations forment un modèle prédictif de la charge dans les réseaux sur la période suivante t+1. De même on écrit Z(t+1) = $\alpha$ * Z(t) + $\beta$.

L'étape d'obtention 104 de la valeur de charge entrante $\beta$ comprend la mesure de flux de données entrant dans le système de communication via les équipements d'aiguillage pendant la période suivante t+1, et l'étape d'obtention 106 de la proportion persistante $\alpha$ comprend une mesure de flux se propageant pendant la période de référence t et au moins la période suivante t+1. La valeur de charge entrante $\beta$ et la proportion persistante $\alpha$ sont des données a posteriori, obtenues après des observations et des calculs. La communication selon les proportions ajustées s'effectue après la période suivante, soit pendant une troisième période t+2. Grâce aux étapes de mesure sur des données réelles et observées, la consigne de répartition est plus précise.

Selon une alternative de l'invention, à l'étape d'obtention 104 de la valeur de charge entrante $\beta$ et à l'étape d'obtention 106 de la proportion persistante $\alpha$, la valeur de charge entrante $\beta$ et la proportion persistante $\alpha$ sont récupérées ou calculées à l'aide d'un algorithme d'apprentissage machine, généralement désigné selon l'expression anglo-saxonne « Machine Learning ». Suivant une autre variante, la valeur de charge entrante $\beta$ et la proportion persistante $\alpha$ sont calculées sur la base d'une matrice de trafic. La matrice de trafic décrit les échanges passés de trames entre les équipements d'aiguillage 8 connectés au réseau 4, 6 considéré.

Dans le contexte d'un algorithme d'apprentissage machine, les données d'entrées comprennent les paramètres choisis parmi : le ou les équipements d'aiguillage concernés, la date, l'heure, l'adresse de la source, l'adresse de destination, des données d'entêtes des trames, au moins une des charges des réseaux, au moins une des proportions cible. L'algorithme est entraîné grâce à un apprentissage supervisé. Les données d'apprentissage proviennent de mesures, ou de simulations de système de communication. La valeur de charge entrante $\beta$ et la proportion persistante $\alpha$ sont des données à priori, ce qui permet d'appliquer la consigne de répartition dès la période suivante t+1. Cette alternative permet d'accélérer le contrôle du flux.

Le procédé comprend une étape d'estimation 108, par le module de contrôle 14, de la consigne de répartition comprenant une proportion ajustée U4 ou U6 pour chaque réseau. A l'étape estimation 108, au moins une ou chaque proportion ajustée d'un réseau dépend : de la proportion cible p4 ou p6 du réseau, de la charge effective X(t) ou Y(t) associée au réseau, de la valeur de charge entrante $\beta$, et de la proportion persistante $\alpha$ ; et étant apte à minimiser, sur la période suivante ; un score de divergence de répartition par rapport à la répartition cible. Le score de divergence de répartition est également appelé critère d'équilibrage.

Le score de divergence comprend une somme de différences ; chaque différence étant associée à l'un des réseaux et comprenant l'écart entre sa proportion cible et un ratio de charge du réseau rapporté à la charge totale du système de communication 2 sur un ensemble T de périodes. La somme est effectuée sur l'ensemble des réseaux. La somme est une somme de valeurs absolues des différences, ou une somme quadratique desdites différences. D'autre formules mathématiques sont considérées.

Des ratios de charge estimés sur la période suivante s'écrivent sous la forme X(t+1)/Z(t+1) et Y(t+1)/Z(t+1) pour le premier et le deuxième réseau respectivement. Pour chaque réseau, le ratio de charge estimé est égal à la charge estimée dudit réseau divisé par la charge totale dans le système, ces charges étant calculées sur la période suivante t+1.

Dans la version quadratique, le score de divergence J s'écrit sous la forme :

$$J = \sum_{n=0}^{T}\left(\left(\frac{X(t+n)}{Z(t+n)} - \rho4\right)^2 + \left(\frac{Y(t+n)}{Z(t+n)} - \rho6\right)^2\right)$$

où l'on effectue des calculs pour différentes périodes n : t, t+1, ..., t+n, ... T.

La solution où T=1 est optimale puisqu'elle permet de se rapprocher au plus près des répartitions cibles p4 et p6. Elle limite également les calculs nécessaires, ce qui permet de rapidement appliquer la consigne de répartition. Les réseaux reçoivent plus rapidement leurs correctifs, et les flux d'entrée sont plus rapidement répartis selon des conditions évitant les pics tout en évitant de sous utiliser une partie du système.

Dès lors, on identifie : U4 = p4 + α/β * (p4 * Y(t) - p6 * X(t)), et U6 = 1 - U4. Ces résultats optimisent à la fois la précision du résultat et le temps de calcul requis car ils reposent sur un système linéaire de deux équations à deux inconnues.

Lorsque le système comprend au moins trois réseaux, le score de divergence J est généralisé pour un système comprenant plus de réseaux. Une résolution mathématique permet d'identifier des proportions ajustées Ui pour chaque ième réseau.

Le procédé comprend une étape de communication 110 des proportions ajustées aux équipements d'aiguillage pendant laquelle le module de contrôle communique les proportions ajustées aux équipements d'aiguillage.

Le procédé comprend une étape de répartition 112 de flux entrant, selon les proportions ajustées, entre les réseaux par les équipements d'aiguillage.

Suite à l'étape répartition 112, ou entre l'étape communication 110 et l'étape répartition 112, le procédé itère. Il effectue à nouveau l'étape mesure 102 de flux des réseaux.

La période de référence est une période de mesure. Elle est plus courte que le temps de propagation d'au moins un des flux, préférentiellement que la majorité des flux de données. La mesure des flux en sortie des réseaux s'effectue pendant toute l'étape de mesure. La durée de la période de référence est comprise entre 1s et 2s.

Selon une option de l'invention, certaines étapes s'effectuent en même temps. Par exemple les étapes d'obtention s'effectuent optionnellement simultanément.

## Revendications

1. Procédé de répartition de flux de données dans un système de communication (2) comprenant une pluralité de réseaux (4, 6) séparés les uns des autres, et un jeu d'équipements d'aiguillage (8) connectés aux réseaux et adaptés à diriger un flux entrant (10) vers l'un des réseaux (4, 6) ; au moins un ou chaque équipement d'aiguillage (8) dudit jeu étant configuré de manière à diriger toutes les trames de données d'un même flux entrant (10) vers un autre équipement d'aiguillage (8) dudit jeu via un même réseau (4, 6) de la pluralité de réseaux; le procédé comprenant l'étape :

   • mesure (102) de flux des réseaux (4, 6) afin de calculer une charge effective propre à chaque réseau sur une période de référence ;

   **caractérisé en ce que** le procédé comprend en outre les étapes suivantes :

   • obtention (100) d'une répartition cible de flux entre les réseaux (4, 6), la répartition cible comprenant des proportions cibles (p4, p6) associées aux réseaux ;
   • obtention (104) d'une valeur de charge entrante β dans les réseaux (4, 6) sur une période suivant la période de référence ;
   • obtention (106) d'une proportion persistante α de flux se propageant dans les réseaux (4, 6) pendant à la fois la période de référence et la période suivante ;
   • estimation (108), avec des moyens de contrôle (14), d'une consigne de répartition comprenant une proportion ajustée (U4, U6) pour chaque réseau (4, 6),

      o au moins une ou chaque proportion ajustée étant fonction : d'une des proportions cibles (p4, p6), d'une des charges effectives, de la valeur de charge entrante β, et de la proportion persistante α ; et étant apte à minimiser un score de divergence de répartition par rapport à la répartition cible sur la période suivante ;

   • répartition (112) de flux entrant (10), selon les proportions ajustées, entre les réseaux (4, 6) par les équipements d'aiguillage (8).

2. Procédé de répartition de flux de données selon la revendication 1, **caractérisé en ce que** l'étape d'obtention (104) de la valeur de charge entrante β comprend une mesure de flux de données entrant dans le système de communication (2) via les équipements d'aiguillage (8) pendant la période suivante, et l'étape d'obtention (106) de la proportion persistante α comprend une mesure de flux se propageant pendant, à la fois la période de référence et au moins la période suivante via les équipements d'aiguillage (8).

3. Procédé de répartition de flux de données selon la revendication 1, **caractérisé en ce qu'**à l'étape d'obtention (104) de la valeur de charge entrante β et à l'étape d'obtention (106) de la proportion persistante α, la valeur de charge entrante β et la proportion persistante α sont établies à l'aide d'un algorithme d'apprentissage machine.

4. Procédé de répartition de flux de données selon l'une des revendications 1 à 3, **caractérisé en ce que** le système de communication (2) comprend des interfaces (11) de sortie de réseau (4, 6) reliant chaque équipement d'aiguillage (8) à chaque réseau de manière indépendante ; à l'étape de mesure (102) les flux sont mesurés auxdites interfaces de sortie réseau (4, 6), lesdits flux sortants étant mesurés par les équipements d'aiguillage (8).

5. Procédé de répartition de flux de données selon l'une des revendications 1 à 4, **caractérisé en ce que** le score de divergence de répartition comprend une somme de différences, chaque différence étant associée à l'un des réseaux (4, 6) et comprenant l'écart entre une des proportions cibles (p4, p6) et un ratio de charge réseau sur la période suivante.

6. Procédé de répartition de flux de données selon l'une des revendications 1 à 5, **caractérisé en ce que** les moyens de contrôle comprennent un module de contrôle (14) séparé des équipements d'aiguillage (8), le procédé comprend en outre une étape de communication des proportions ajustées aux équipements d'aiguillage (8).

7. Procédé de répartition de flux de données selon l'une des revendications 1 à 6, **caractérisé en ce que** le jeu de réseaux (4, 6) comprend un premier réseau (4) et un deuxième réseau (6), les proportions cibles comprenant une première proportion cible (p4) pour le premier réseau (4) et une deuxième proportion cible (4, 6) pour le deuxième réseau (6), la deuxième proportion cible étant supérieure ou égale au double de la première proportion cible.

8. Produit programme d'ordinateur comprenant des instructions qui, lorsque le programme est exécuté par un ordinateur, conduisent celui-ci à mettre en oeuvre le procédé de répartition de flux de données selon l'une des revendications 1 à 7.

9. Système de communication (2) comprenant des moyens de contrôle, une pluralité de réseaux (4, 6) séparés les uns des autres, et un jeu d'équipements d'aiguillage (8) connectés aux réseaux et adaptés à diriger un flux entrant (10) vers l'un des réseaux (4, 6) ; au moins un ou chaque équipement d'aiguillage dudit jeu étant configuré de manière à diriger toutes les trames de données d'un même flux de données entrant vers un autre équipement d'aiguillage (8) dudit jeu via un même réseau (4, 6) de la pluralité de réseaux ; le système de communication étant configuré de manière à exécuter le procédé de répartition de flux de données selon l'une des revendications 1 à 7.

10. Système de communication (2) selon la revendication 9, **caractérisé en ce que** les moyens de contrôle sont intégrés dans au moins un ou dans chaque équipement d'aiguillage.

11. Système de communication (2) selon l'une des revendications 9 à 10, **caractérisé en ce que** chaque équipement d'aiguillage (8) est un routeur et chaque réseau (4, 6) est un réseau étendu.

**Patentansprüche**

1. Verfahren zur Verteilung von Datenströmen in einem Kommunikationssystem (2), umfassend eine Vielzahl von voneinander getrennten Netzen (4, 6) und einen Satz von Verzweigungsgeräten (8), die mit den Netzen verbunden sind und angepasst sind, um einen eingehenden Datenstrom (10) zu einem der Netze (4, 6) zu leiten; wobei mindestens eines oder jedes Verzweigungsgerät (8) des Satzes konfiguriert ist, um alle Datensätze eines einzelnen eingehenden Datenstroms (10) über dasselbe Netz (4, 6) der Vielzahl von Netzen zu einem anderen Verzweigungsgerät (8) des Satzes zu leiten; das Verfahren umfassend den folgenden Schritt:

   • Messen (102) der Ströme der Netze (4, 6), um eine effektive Last zu berechnen, die jedem Netz über einen Referenzzeitraum eigen ist;

   **dadurch gekennzeichnet, dass** das Verfahren ferner die folgenden Schritte umfasst:

   • Erlangen (100) einer Zielverteilung von Strömen zwischen den Netzen (4, 6), die Zielverteilung umfassend Zielanteile (p4, p6), die mit den Netzen assoziiert sind;
   • Erlangen (104) eines Werts einer eingehenden Last β in den Netzen (4, 6) über einen Zeitraum nach dem Referenzzeitraum;
   • Erlangen (106) eines persistenten Anteils α von Strömen, die sich in den Netzen (4, 6) während des Referenz- als auch des folgenden Zeitraums ausbreiten;
   • Schätzen (108), mit Steuerungseinrichtungen (14), einer Verteilungsvorgabe, umfassend einen angepassten Anteil (U4, U6) für jedes Netz (4, 6),

      o wobei mindestens ein oder jeder angepasste Anteil abhängig ist: von einem der Zielanteile (p4, p6), einer der effektiven Lasten, dem Wert der eingehenden Last $\beta$ und dem persistenten Anteil $\alpha$; und geeignet ist, um einen Punktwert der Abweichung der Verteilung in Bezug auf die Zielverteilung über den folgenden Zeitraum zu minimieren;

• Verteilen (112) des eingehenden Datenstroms (10) gemäß den angepassten Anteilen zwischen den Netzen (4, 6) durch die Verzweigungsgeräte (8).

2. Verfahren zur Verteilung von Datenströmen nach Anspruch 1, **dadurch gekennzeichnet, dass** der Schritt eines Erlangens (104) des eingehenden Lastwerts $\beta$ eine Messung von Datenströmen umfasst, die während der folgenden Periode über die Verzweigungsgeräte (8) in das Kommunikationssystem (2) eintreten, und der Schritt eines Erlangens (106) des persistenten Anteils $\alpha$ eine Messung von Strömen umfasst, die sich während sowohl des Referenzzeitraums als auch mindestens des folgenden Zeitraums über die Verzweigungsgeräte (8) ausbreiten.

3. Datenstromverteilungsverfahren nach Anspruch 1, **dadurch gekennzeichnet, dass** bei dem Schritt eines Erlangens (104) des eingehenden Lastwerts $\beta$ und im Schritt der Ermittlung (106) des persistenten Anteils $\alpha$ der eingehende Lastwert $\beta$ und der persistente Anteil $\alpha$ mittels eines Algorithmus maschinellen Lernens ermittelt werden.

4. Verfahren zur Verteilung von Datenströmen nach einem der Ansprüche 1 bis 3, **dadurch gekennzeichnet, dass** das Kommunikationssystem (2) Netzausgangsschnittstellen (11) (4, 6) umfasst, die jedes Verzweigungsgerät (8) unabhängig mit jedem Netz verbinden; in dem Messschritt (102) die Ströme an den Netzausgangsschnittstellen (4, 6) gemessen werden, wobei die ausgehenden Ströme von den Verzweigungsgeräten (8) gemessen werden.

5. Verfahren zur Verteilung von Datenströmen nach einem der Ansprüche 1 bis 4, **dadurch gekennzeichnet, dass** der Verteilungsdivergenz-Punktwert eine Summe von Differenzen umfasst, wobei jede Differenz mit einem der Netze (4, 6) assoziiert ist und die Abweichung zwischen einem der Zielanteile (p4, p6) und einem Netzlastverhältnis über den folgenden Zeitraum umfasst.

6. Verfahren zur Verteilung von Datenströmen nach einem der Ansprüche 1 bis 5, **dadurch gekennzeichnet, dass** die Steuerungseinrichtungen ein Steuermodul (14) umfassen, das von den Verzweigungsgeräten (8) getrennt ist, das Verfahren ferner umfassend einen Schritt zur Kommunikation von angepassten Anteilen an die Verzweigungsgeräten (8).

7. Verfahren zur Verteilung von Datenströmen nach einem der Ansprüche 1 bis 6, **dadurch gekennzeichnet, dass** der Satz von Netzen (4, 6) ein erstes Netz (4) und ein zweites Netz (6) umfasst, wobei die Zielanteile einen ersten Zielanteil (p4) für das erste Netz (4) und einen zweiten Zielanteil (4, 6) für das zweite Netz (6) umfassen, wobei der zweite Zielanteil größer als oder gleich wie das Doppelte des ersten Zielanteils ist.

8. Computerprogrammprodukt, umfassend Anweisungen, die, wenn das Programm von einem Computer ausgeführt wird, diesen veranlassen, das Verfahren zur Verteilung von Datenströmen nach einem der Ansprüche 1 bis 7 durchzuführen.

9. Kommunikationssystem (2), umfassend Steuerungseinrichtungen, eine Vielzahl von voneinander getrennten Netzen (4, 6) und einen Satz von Verzweigungsgeräten (8), die mit den Netzen verbunden und angepasst sind, um einen eingehenden Datenstrom (10) zu einem der Netze (4, 6) zu leiten; wobei mindestens ein oder jedes Verzweigungsgerät des Satzes konfiguriert ist, um alle Datensätze eines gleichen eingehenden Datenstroms über dasselbe Netz (4, 6) der Vielzahl von Netzen zu einem anderen Verzweigungsgerät (8) des Satzes zu leiten; wobei das Kommunikationssystem konfiguriert ist, um das Verfahren zur Verteilung von Datenströmen nach einem der Ansprüche 1 bis 7 ausführt.

10. Kommunikationssystem (2) nach Anspruch 9, **dadurch gekennzeichnet, dass** die Steuerungseinrichtungen in mindestens einem oder jedem Verzweigungsgerät integriert sind.

11. Kommunikationssystem (2) nach einem der Ansprüche 9 bis 10, **dadurch gekennzeichnet, dass** jedes Verzweigungsgerät (8) ein Router ist und jedes Netz (4, 6) ein Weitverkehrsnetz ist.

**Claims**

1. Method for distributing data flows in a communication system (2) comprising a plurality of networks (4, 6) that are separate from each other, and a set of routing devices (8) connected to the networks and adapted to direct an incoming flow (10) to one of the networks (4, 6); at least one or each routing device (8) of said set being configured to direct all data frames of the same incoming flow (10) to another routing device (8) of said set via the same network (4, 6) of the plurality of networks; the method comprising the following step:

> • measurement (102) of the network flows (4, 6) to calculate the effective load for each network over a reference period;

**characterised in that** the method further comprises the following steps:

> • obtaining (100) of a target distribution of flows between the networks (4, 6), the target distribution comprising target proportions (p4, p6) associated with the networks;
> • obtaining (104) of an incoming load value $\beta$ in the networks (4, 6) over a period following the reference period;
> • obtaining (106) of a persistent proportion $\alpha$ of flows propagating in the networks (4, 6) during both the reference period and the following period;
> • estimation (108), using control means (14), of a distribution instruction comprising an adjusted proportion (U4, U6) for each network (4, 6),
>
>> o at least one or each adjusted proportion depending on: one of the target proportions (p4, p6), one of the effective loads, the incoming load value $\beta$, and the persistent proportion $\alpha$; and capable of minimising a distribution divergence score relative to the target distribution over the following period;
>
> • distribution (112) of an incoming flow (10), according to the adjusted proportions, between the networks (4, 6) via the routing devices (8).

2. Method of distributing data flows according to claim 1, **characterised in that** the step of obtaining (104) the incoming load value p comprises a measurement of incoming data flows to the communication system (2) via the routing devices (8) during the following period, and the step of obtaining (106) the persistent proportion $\alpha$ comprises a measurement of flows propagating during both the reference period and at least the following period via the routing devices (8).

3. Method of distributing data flows according to claim 1, **characterised in that**, in the step of obtaining (104) the incoming load value $\beta$ and in the step of obtaining (106) the persistent proportion $\alpha$, the incoming load value $\beta$ and the persistent proportion $\alpha$ are established using a machine-learning algorithm.

4. Method for distributing data flows according to one of claims 1 to 3, **characterised in that** the communication system (2) comprises network (4, 6) output interfaces (11) connecting each routing device (8) to each network independently; in the measurement (102) step the flows are measured at said network output interfaces (4, 6), said outgoing flows being measured by the routing devices (8).

5. Method of distributing data flows according to one of claims 1 to 4, **characterised in that** the distribution divergence score comprises a sum of differences, each difference being associated with one of the networks (4, 6) and comprising the deviation between one of the target proportions (p4, p6) and a network load ratio over the following period.

6. Method of distributing data flows according to one of claims 1 to 5, **characterised in that** the control means comprise a control module (14) separate from the routing devices (8), the method further comprising a step of communicating the adjusted proportions to the routing devices (8).

7. Method of distributing data flows according to one of claims 1 to 6, **characterised in that** the set of networks (4, 6) comprises a first network (4) and a second network (6), the target proportions comprising a first target proportion (p4) for the first network (4) and a second target proportion (4, 6) for the second network (6), the second target proportion being greater than or equal to double the first target proportion.

8. Computer program product comprising instructions which, when the program is executed by a computer, cause the computer to implement the data flow distribution method according to one of claims 1 to 7.

9. Communication system (2) comprising control means, a plurality of networks (4, 6) separate from each other, and a set of routing devices (8) connected to the networks and adapted to direct an incoming flow (10) to one of the networks (4, 6); at least one or each routing device of said set being configured to direct all data frames of the same incoming flow to another routing device (8) of said set via the same network (4, 6) of the plurality of networks; the communication system being configured to execute the data flow distribution process according to one of claims 1 to 7.

10. Communication system (2) according to claim 9, **characterised in that** the control means are integrated into at least one or each routing device.

11. Communication system (2) according to one of claims 9 to 10, **characterised in that** each routing device (8) is a router and each network (4, 6) is a wide area network.

FIG.1

**FIG.2**

Obtention d'une répartition cible p —100

Mesure de flux de réseaux —102

Obtention d'une valeur de charge entrante $\beta$ —104

Obtention d'une proportion persistante $\alpha$ —106

Estimation d'une consigne de répartition —108

Communication des proportions ajustées —110

Répartition de flux entrant —112

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2804351 A1, NEC CORP [JP